(19) Europäisches Patentamt
European Patent Office
Office européen des brevets

(11) EP 3 480 469 B1

(12) EUROPEAN PATENT SPECIFICATION

(45) Date of publication and mention of the grant of the patent:
**21.12.2022 Bulletin 2022/51**

(21) Application number: **16908098.3**

(22) Date of filing: **04.07.2016**

(51) International Patent Classification (IPC):
**F04C 18/16** (2006.01)   **F04C 29/00** (2006.01)
**F01C 21/02** (2006.01)   **F04C 23/02** (2006.01)
**H02K 1/27** (2022.01)   **H02K 21/24** (2006.01)

(52) Cooperative Patent Classification (CPC):
**F04C 18/16; F01C 21/02; F04C 23/02;**
**F04C 29/0085; H02K 5/1735; H02K 7/14;**
**H02K 21/24;** F04C 2240/56; F04C 2270/17;
H02K 2205/03; H02K 2213/03

(86) International application number:
**PCT/JP2016/069749**

(87) International publication number:
**WO 2018/008054 (11.01.2018 Gazette 2018/02)**

(54) **SCREW COMPRESSOR**

SCHRAUBENVERDICHTER

COMPRESSEUR À VIS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.05.2019 Bulletin 2019/19**

(73) Proprietor: **Hitachi Industrial Equipment Systems Co., Ltd.**
**Chiyoda-ku**
**Tokyo 101-0022 (JP)**

(72) Inventors:
• **HARASHIMA, Toshikazu**
  **Tokyo 101-0022 (JP)**
• **NISHIMURA, Hitoshi**
  **Tokyo 101-0022 (JP)**
• **TSUCHIYA, Takeshi**
  **Tokyo 100-8280 (JP)**
• **SADAKATA, Kosuke**
  **Tokyo 101-0022 (JP)**
• **TAKANO, Masahiko**
  **Tokyo 101-0022 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**EP-A1- 3 279 478**   **WO-A1-2007/026047**
**WO-A1-2007/026047**   **WO-A1-2016/157448**
**DE-U1- 29 904 411**   **JP-A- 2006 266 210**
**JP-A- 2015 148 172**   **JP-U- S52 139 413**
**US-A1- 2014 322 059**

EP 3 480 469 B1

**Description**

Technical Field

The present invention relates generally to screw compressors including liquid-injected compressor main units and axial-gap motors that drive the compressor main units and, more particularly, to a screw compressor in which a screw rotor of a compressor main unit is coaxially connected with a rotary shaft of a motor.

Background Art

Patent Document 1 discloses a screw compressor including a liquid-injected compressor main unit and a radial-gap motor that drives the compressor main unit. The following details the screw compressor.

The radial-gap motor includes a rotor shaft, a rotor mounted on the rotor shaft, and a stator spaced apart from the rotor in a radial direction. The rotor shaft is rotated by magnetic action of the stator and the rotor.

The compressor main unit includes a pair of intermeshing male and female screw rotors. One of the screw rotors is coaxially connected with the rotor shaft of the motor. Rotation of the rotor shaft of the motor causes the one of the screw rotors to rotate, which, in turn, rotates the other of the screw rotors in mesh with the one of the screw rotors. As the pair of screw rotors rotates, compression chambers defined by tooth grooves of the screw rotors and an inner wall of a casing move in an axial direction. The compression chamber draws in gas via a suction port (opening) on one side in the axial direction and compresses the gas to thereby discharge the compressed gas via a discharge port (opening) on the other side in the axial direction.

The liquid-injected compressor main unit injects a liquid into the compression chamber. The liquid injected in the compression chamber seals gaps in the compression chamber (specifically, a gap between the screw rotors and a gap between the screw rotor and the casing) and cools the compressed gas.

The screw rotors each include a tooth portion having a plurality of spiral teeth, a suction-side shaft portion (motor-side shaft portion) connected with one side in the axial direction of the tooth portion (suction side, or the motor side), and a discharge-side shaft portion (opposite-side shaft portion) connected with the other side in the axial direction of the tooth portion (discharge side, or the side opposite to the motor). As described previously, the suction-side shaft portion of one screw rotor is connected coaxially with the rotor shaft of the motor.

The suction-side shaft portion of each screw rotor is rotatably supported by a plurality of suction-side bearings. The discharge-side shaft portion of each screw rotor is rotatably supported by a plurality of discharge-side bearings. The discharge-side bearings are a plurality of angular ball bearings held at fixed positions inside the casing. The discharge-side bearings restrict axial movement of the discharge-side shaft portion of the screw rotor and bear a radial load and axial loads in both directions (specifically, a forward direction extending from the discharge side toward the suction side and a reverse direction extending from the suction side toward the discharge side). The suction-side bearings are a plurality of angular ball bearings held axially movably in the casing. The suction-side bearings permit axial movement of the suction-side shaft portion of the screw rotor and support the radial load and the axial load in the forward direction.

Prior Art Document

Patent Document

Patent Document 1: JP-2004-150412-A (see FIGS. 1 to 3.)
WO 2007/026047 A1 describes a cooling system for an aggregate set comprising an axial flux electric machine with a disc-like rotor, a disc-like stator and a screw compressor. The rotating elements of the aggregate set are all coupled to the same shaft, in order to rotate simultaneously. The screw compressor is oil-spray cooled. The electric machine comprises an airtight sealed housing to which a separate cooling duct is adjacently positioned. The cooling fluid of the cooling duct is common with the cooling fluid that circulates through the screw compressor.
DE 299 04 411 Ul describes a screw compressor comprising two screw rotors (a main and a peripheral rotor) that are mounted on parallel shafts. The discharge side-shaft portions are supported by an axial clearance-free arrangement of angular contact ball bearings, which are used together with a spacer ring on a discharge side-shaft portion for an exact adjustment of a rotor end gap.

Problem to be Solved by the Invention

For a reason of size reduction, for example, adoption of an axial-gap motor in place of the radial-gap motor described above is being studied. The axial-gap motor includes a rotor shaft, at least one rotor mounted on the rotor shaft, and at least one stator spaced apart from the rotor in the axial direction. The rotor shaft is rotated by magnetic action of the stator and the rotor.

As in the configuration disclosed in Patent Document 1, the suction-side shaft portion of one screw rotor may be connected coaxially with the rotor shaft of the axial-gap motor. Additionally, as in the configuration disclosed in Patent Document 1, the discharge-side bearings may restrict axial movement of the discharge-side shaft portion (opposite-side shaft portion) of the screw rotor and the suction-side bearings may permit axial movement of the suction-side shaft portion (motor-side shaft portion) of the screw rotor. The foregoing arrangements, however, pose the following problem.

The screw rotor expands by compression heat and the rotor shaft of the motor expands by heat generated by the motor. The restriction of the axial movement of the discharge-side shaft portion of the screw rotor can considerably reduce changes in the gap between a discharge-side end face of the tooth portion of the screw rotor and a wall surface of the casing. Performance of the compressor main unit can thereby be enhanced. Meanwhile, a gap between the rotor and the stator of the motor is affected by not only the thermal expansion of the rotor shaft of the motor, but also the thermal expansion of the screw rotor, resulting in large changes in the gap. Thus, performance of the motor is degraded.

The present invention has been accomplished in light of such circumstances and one of the problems to be solved is to enhance performance of the compressor main unit and the motor by reducing changes in the gap between the discharge-side end face of the tooth portion of the screw rotor and the wall surface of the casing and in the gap between the rotor and the stator of the motor.

Means for Solving the Problem

The foregoing problem is solved according to the features of the independent claim. The dependent claim relate to advantageous embodiments of invention. One exemplary aspect of the present invention provides a screw compressor including a liquid-injected compressor main unit that includes a screw rotor and compresses gas with injecting liquid in a compression chamber defined by a tooth groove of the screw rotor and an axial-gap motor that drives the compressor main unit. The screw rotor has a motor-side shaft portion connected coaxially with a rotor shaft of the motor. The screw compressor includes a bearing that rotatably supports the motor-side shaft portion of the screw rotor. In this screw compressor, the bearing restricts axial movement of the motor-side shaft portion and bears a radial load and axial loads in both directions.

Effects of the Invention

The aspect of the present invention can reduce changes in a gap between a discharge-side end face of a tooth portion of the screw rotor and a wall surface of a casing and in a gap between the rotor and the stator of the motor, to thereby enhance performance of the compressor main unit and the motor.

Objects, configurations, and effects other than those described above will become apparent from the following description of embodiments.

Brief Description of Drawings

FIG. 1 is a vertical cross-sectional view of a configuration of a screw compressor according to a first embodiment of the present invention, depicting a rated operation state of the compressor.
FIG. 2 is a vertical cross-sectional view of a configuration of the screw compressor according to the first embodiment of the present invention, depicting a stationary state of the compressor.
FIG. 3 is a vertical cross-sectional view of a configuration of a screw compressor according to a first modification of the present invention, depicting a stationary state of the compressor.
FIG. 4 is a vertical cross-sectional view of a configuration of a screw compressor according to a second modification of the present invention, depicting a stationary state of the compressor.
FIG. 5 is a vertical cross-sectional view of a configuration of a screw compressor according to a second embodiment of the present invention, depicting a rated operation state of the compressor.

Modes for Carrying Out the Invention

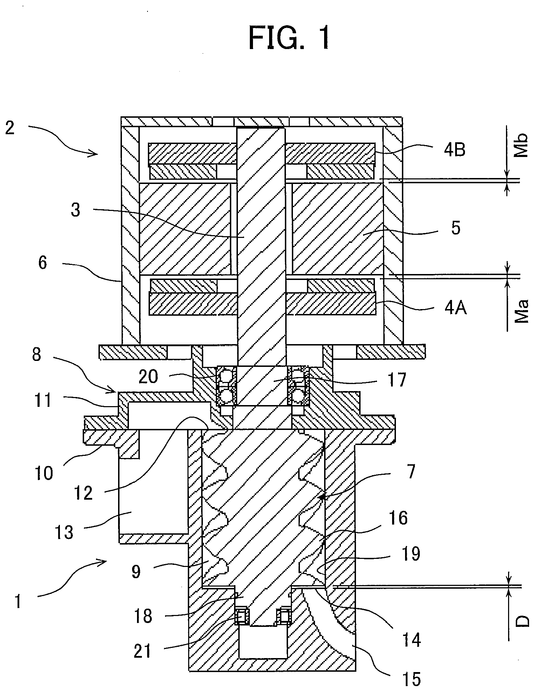

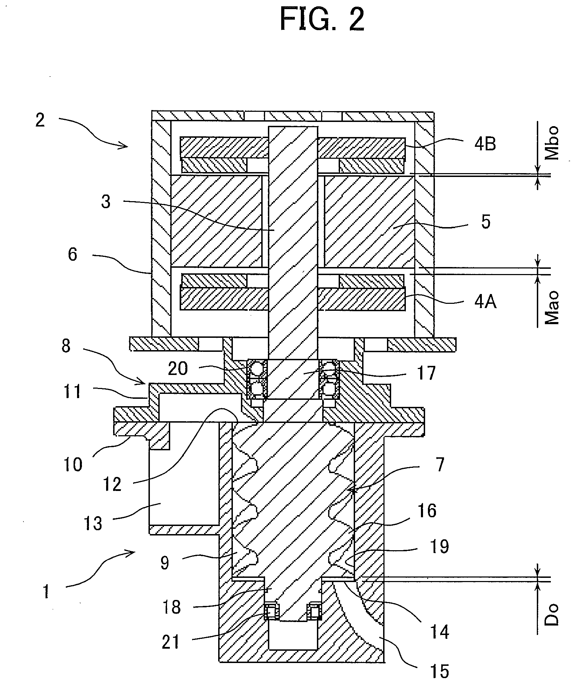

A first embodiment of the present invention will be described with reference to FIGS. 1 and 2. FIGS. 1 and 2 are vertical cross-sectional views of configurations of a screw compressor according to the present embodiment. FIG. 1 depicts a rated operation state (high temperature state) of the compressor. FIG. 2 depicts a stationary state (room temperature state) of the compressor.

The screw compressor of the present embodiment includes an oil-injected compressor main unit 1 and a radial-gap motor 2, which drives the compressor main unit 1. The compressor main unit 1 is integrated with the motor 2. Specifically, the compressor main unit 1 and the motor 2 are disposed vertically such that screw rotors of the compressor main unit 1 and a rotor shaft of the motor 2 to be described later extend in the vertical direction. The motor 2 is disposed on the upper side of the compressor main unit 1.

The motor 2 includes a rotor shaft (shaft) 3, a rotor 4A, a rotor 4B, a stator 5, and a motor casing 6. The rotor 4A is mounted on an output side (side adjacent to the compressor main unit 1) of the rotor shaft 3. The rotor 4B is mounted on a non-output side (side opposite to the compressor main unit 1) of the rotor shaft 3. The stator 5 is disposed between the rotors 4A and 4B so as to be spaced axially apart from the rotors 4A and 4B. The motor casing 6 houses thereinside the rotors 4A and 4B and the stator 5 and supports the stator 5.

As depicted in the figure, the motor casing 6 includes a motor main casing and an end cover removably mounted in an upper end opening of the motor main casing. The rotors 4A and 4B are each a permanent magnet type rotor, for example. The stator 5 is a winding type stator, for example. The rotor shaft 3 is rotated by magnetic action of the rotors 4A and 4B and the stator 5.

The compressor main unit 1 includes a pair of intermeshing male and female screw rotors (specifically, a male rotor 7 and a female rotor not depicted) and a compressor main unit casing 8, which houses thereinside the screw rotors. Tooth grooves in the screw rotors and an inner wall of the compressor main unit casing 8 define compression chambers 9. The compressor main unit casing 8 includes a main casing 10 and a suction-side casing 11, which is coupled with an upper side (suction side) of the main casing 10. The suction-side casing 11 is coupled with the motor main casing.

The male rotor 7 is coaxially connected with the rotor shaft 3 of the motor 2. Rotation of the rotor shaft 3 of the motor 2 causes the male rotor 7 to rotate and the female rotor in mesh with the male rotor 7 to rotate. The rotation of the male rotor 7 and the female rotor causes the compression chamber 9 to move in the axial direction. The compression chamber 9 draws in air (gas) from a suction flow path 13 via a suction port 12 (opening) on one side in the axial direction (the side adjacent to the motor) and compresses the air to thereby discharge the compressed air (compressed gas) to a discharge flow path 15 via a discharge port 14 (opening) on the other side in the axial direction (the side opposite to the motor).

The oil-injected (liquid-injected) compressor main unit 1 is configured to inject oil (liquid) into the compression chamber 9 on a suction stroke. The oil injected in the compression chamber 9 seals gaps in the compression chamber 9 (specifically, a gap between the male rotor 7 and the female rotor and a gap between the male rotor 7 or the female rotor and the casing 8) and cools the compressed air.

The male rotor 7 includes a tooth portion 16 having a plurality of spiral teeth, a suction-side shaft portion (motor-side shaft portion) 17 connected with one side in the axial direction of the tooth portion 16, and a discharge-side shaft portion (opposite-side shaft portion) 18 connected with the other side in the axial direction of the tooth portion 16. Similarly, the female rotor includes a tooth portion, a suction-side shaft portion, and a discharge-side shaft portion. The suction-side shaft portion 17 of the male rotor 7 is coaxially connected with the rotor shaft 3 of the motor 2 as described previously by being integrally molded with the rotor shaft 3 of the motor 2.

The tooth portion 16 of the male rotor 7 and the tooth portion of the female rotor are housed in a tooth portion housing chamber 19 of the main casing 10. The discharge-side shaft portion 18 of the male rotor 7 and the discharge-side shaft portion of the female rotor are housed in the main casing 10. The suction-side shaft portion 17 of the male rotor 7 and the suction-side shaft portion of the female rotor are housed in the suction-side casing 11.

The suction-side shaft portion 17 of the male rotor 7 is rotatably supported by a plurality of suction-side bearings 20. The discharge-side shaft portion 18 of the male rotor 7 is rotatably supported by a single discharge-side bearing 21. The suction-side bearings 20 are a plurality of angular ball bearings (specifically, combined angular contact ball bearings for face to face type or back to back type) and outer rings thereof are held at fixed positions in the suction-side casing 11 and inner rings thereof are fixed at fixed positions of the suction-side shaft portion 17 of the male rotor 7. The suction-side bearings 20 restrict axial movement of the suction-side shaft portion 17 of the male rotor 7 and bear a radial load and axial loads in both directions (specifically, a forward direction extending from the discharge side toward the suction side and a reverse direction extending from the suction side toward the discharge side).

The discharge-side bearing 21 is a cylindrical roller bearing (specifically, cylindrical roller bearing in which an outer ring or an inner ring has no flanges and the outer ring and the inner ring are axially movable relative to each other) and the outer ring thereof is held at a fixed position in the main casing 10 and the inner ring thereof is fixed at a fixed position of the discharge-side shaft portion 18 of the male rotor 7. The discharge-side bearing 21 bears a radial load, while permitting axial movement of the discharge-side shaft portion 18 as a result of thermal expansion of the male rotor 7.

Similarly, the suction-side shaft portion of the female rotor is rotatably supported by suction-side bearings 20. The discharge-side shaft portion of the female rotor is rotatably supported by discharge-side bearing 21.

Effects of the present embodiment will be described below.

In the present embodiment, the suction-side bearings 20 restrict axial movement of the suction-side shaft portion 17 (motor-side shaft portion) of the male rotor 7 and the discharge-side bearing 21 permits axial movement of the discharge-side shaft portion 18 (opposite-side shaft portion) of the male rotor 7. Thus, a gap between a discharge-side end face of the tooth portion 16 of the male rotor 7 and a wall surface of the casing 8 is affected by the thermal expansion of the male rotor 7, but not by the thermal expansion of the rotor shaft 3 of the motor 2. Changes can thus be reduced in the gap between the discharge-side end face of the tooth portion 16 of the male rotor 7 and the wall surface of the casing 8. Similarly, changes can also be reduced in a gap between a discharge-side end face of the tooth portion of the female rotor and a wall surface of the casing 8. Thus, dimensions of the gaps described previously can be reduced to prevent leakage of compressed air and performance of the compressor main unit 1 can be enhanced.

A gap between the rotor 4A and the stator 5 and a gap between the rotor 4B and the stator 5 are affected by the thermal expansion of the rotor shaft 3 of the motor 2, but not the thermal expansion of the male rotor 7. Thus, changes can be reduced in the gap between the rotor 4A and the stator 5 and the gap between the rotor 4B and the stator 5. Thus, motor efficiency can be enhanced by setting dimensions of the foregoing gaps to optimum values and performance of the motor 2 can be improved.

Consider a case, as a comparative example, in which axial movement of the discharge-side shaft portion of the male rotor or the discharge-side shaft portion of the female rotor is restricted by a plurality of angular ball bearings and axial movement of the suction-side shaft portion of the male rotor or the suction-side shaft portion of the female rotor is restricted by a single cylindrical roller bearing. As compared with such a comparative example, the present embodiment can have the discharge-side shaft portion 18 of the male rotor 7 and the discharge-side shaft portion of the female rotor shorter in length. Thus, the compressor main unit 1 can be reduced in size. Or, because a degree of freedom in design of the discharge flow path 15 is increased, performance of the compressor main unit 1 can be enhanced.

Dimensions of the gaps in the present embodiment will be described below.

A dimension D of the gap between the discharge-side end face of the tooth portion 16 of the male rotor 7 and the wall surface of the casing 8 under a rated operation state (at high temperature) of the compressor is given by expression (1) given below, where Do denotes a dimension of the gap between the discharge-side end face of the tooth portion 16 of the male rotor 7 and the wall surface of the casing 8 under a stationary state (at room temperature) of the compressor (Do > D). Where, $\Delta$Ls denotes an amount of thermal expansion of the tooth portion 16 and $\Delta$Lb denotes an amount of thermal expansion of the tooth portion housing chamber 19 ($\Delta$Ls > $\Delta$Lb).

$$D = Do - (\Delta Ls - \Delta Lb) \ldots (1)$$

Because D > 0, the dimension Do of the gap between the discharge-side end face of the tooth portion 16 of the male rotor 7 and the wall surface of the casing 8 under the stationary state (at room temperature) of the compressor is given by expression (2) given below.

$$Do > \Delta Ls - \Delta Lb \ldots (2)$$

A dimension Ma of the gap between the rotor 4A and the stator 5 under the rated operation state (at high temperature) of the compressor is given by expression (3) given below. Where, Mao denotes a dimension of the gap between the rotor 4A and the stator 5 under the stationary state (at room temperature) of the compressor and $\Delta$Ma denotes an amount of change in the dimension of the gap between the rotor 4A and the stator 5 ($\Delta$Ma > 0).

$$Ma = Mao - \Delta Ma \ldots (3)$$

A dimension Mb of the gap between the rotor 4B and the stator 5 under the rated operation state (at high temperature) of the compressor is given by expression (4) given below. Where, Mbo denotes a dimension of the gap between the rotor 4B and the stator 5 under the stationary state (at room temperature) of the com-

pressor and $\Delta$Mb denotes an amount of change in the dimension of the gap between the rotor 4B and the stator 5 ($\Delta$Mb > 0, $\Delta$Mb $\approx$ $\Delta$Ma).

$$Mb = Mbo + \Delta Mb \ldots (4)$$

Because preferably Ma $\approx$ Mb holds, preferably the relation of expression (5) given below holds.

$$Mao > Mbo \ldots (5)$$

The first embodiment has been described for an exemplary configuration in which the axial-gap motor 2 includes the two rotors 4A and 4B and the one stator 5 disposed between the rotors 4A and 4B. Specifically, the axial-gap motor is only required to include at least one rotor and at least one stator disposed to be spaced apart from the rotor in the axial direction.

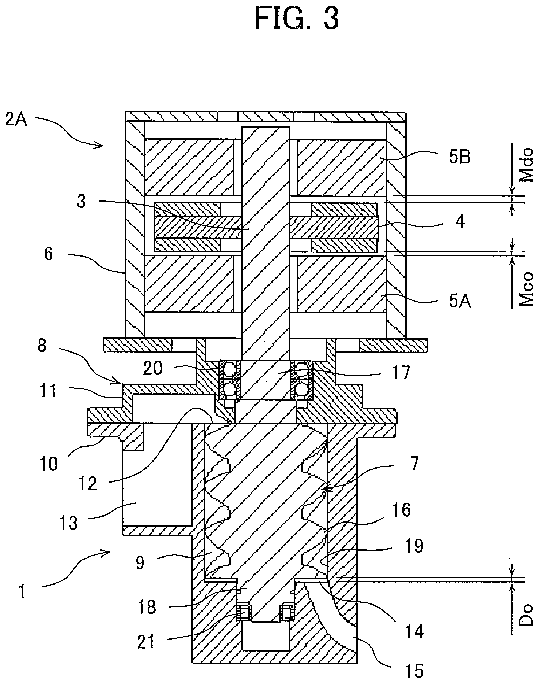

Specifically, as in a first modification depicted in FIG. 3, for example, an axial-gap motor 2A may include a rotor 4 mounted on a rotor shaft, a stator 5A disposed on an output side (side adjacent to a compressor main unit 1) with respect to the rotor 4, and a stator 5B disposed on a non-output side (side opposite to the compressor main unit 1) with respect to the rotor 4. Effects identical to the effects achieved by the first embodiment can be achieved even in the modification.

Dimensions of gaps in the present modification will be described. A dimension Mc of a gap between the rotor 4 and the stator 5A under the rated operation state (at high temperature) of the compressor is given by expression (6) given below. Where, Mco denotes a dimension of the gap between the rotor 4 and the stator 5A under the stationary state (at room temperature) of the compressor and $\Delta$Mc denotes an amount of change in the dimension of the gap between the rotor 4 and the stator 5A ($\Delta$Mc > 0).

$$Mc = Mco + \Delta Mc \ldots (6)$$

A dimension Md of a gap between the rotor 4 and the stator 5B under the rated operation state (at high temperature) of the compressor is given by expression (7) given below. Where, Mdo denotes a dimension of the gap between the rotor 4 and the stator 5B under the stationary state (at room temperature) of the compressor and $\Delta$Md denotes an amount of change in the dimension of the gap between the rotor 4 and the stator 5B ($\Delta$Md > 0, $\Delta$Mc $\approx$ $\Delta$Md).

$$Md = Mdo - \Delta Md \ldots (7)$$

Because preferably Mc $\approx$ Md holds, preferably the relation of expression (8) given below holds.

$$Mco < Mdo \quad ... \quad (8)$$

The first embodiment has been described for an exemplary configuration in which the compressor main unit casing 8 includes the main casing 10 and the suction-side casing 11, which is coupled with the upper side (suction side) of the main casing 10.

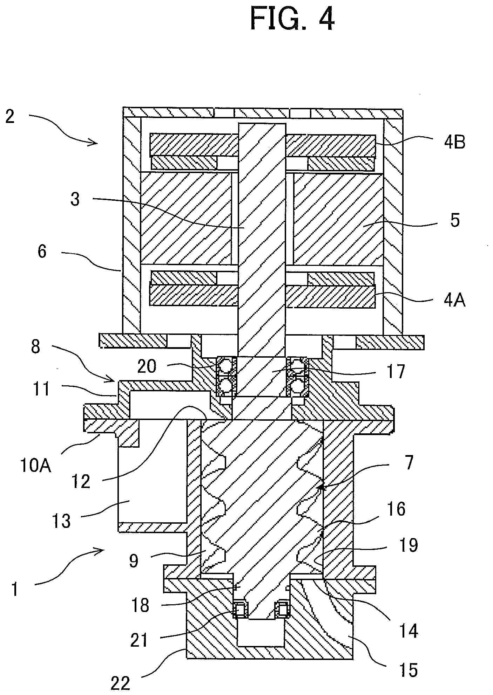

Specifically, as in a second modification depicted in Fig. 4, for example, a compressor main unit casing 8 may include a main casing 10A, a suction-side casing 11, which is coupled with an upper side (suction side) of the main casing 10A, and a discharge-side casing 22, which is coupled with a lower side (discharge side) of the main casing 10A. Then, the main casing 10A may house the tooth portions of the screw rotors and the discharge-side casing 22 may house the discharge-side shaft portions of the screw rotors and the discharge-side bearings. In such a modification, machining accuracy of the discharge flow path 15 can be enhanced compared with the first embodiment.

Additionally, in the first embodiment, the compressor main unit 1 has been described as an oil-injected type to compress air with injecting oil in the compression chamber 9. Specifically, the compressor main unit may, for example, be a water-injected type (liquid-injected type) to compress air (gas) with injecting water (liquid) in the compression chamber 9. The same effects as those described above can be achieved in this case, too.

In the first embodiment, the screw compressor has been described for an exemplary configuration in which the screw rotors of the compressor main unit 1 and the rotor shaft 3 of the motor 2 extend in the vertical direction.

Specifically, the screw compressor may be configured such that the screw rotors of the compressor main unit and the rotor shaft of the motor extend in the horizontal direction. The same effects as those described above can be achieved in this case, too.

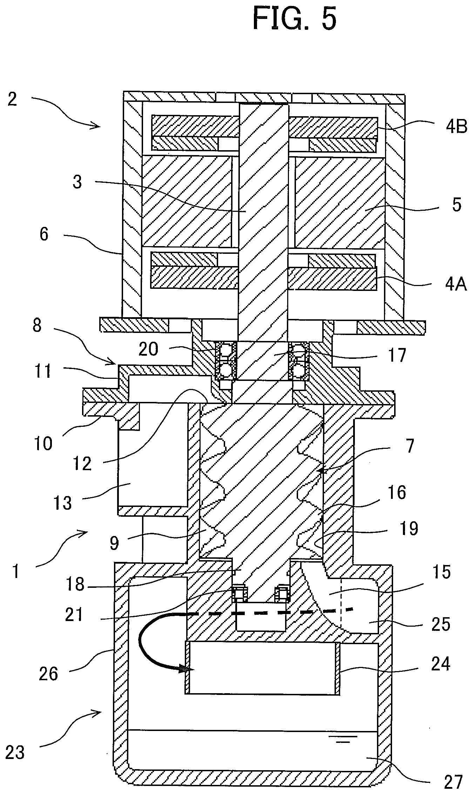

A second embodiment of the present invention will be described below with reference to FIG. 5. FIG. 5 is a vertical cross-sectional view of a configuration of a screw compressor according to the present embodiment of the present invention, depicting the rated operation state (high temperature state) of the compressor. In the present embodiment, like or corresponding parts are identified by the same reference numerals as those used in the first embodiment and descriptions for those parts will be omitted as appropriate.

The screw compressor in the present embodiment includes an oil-injected compressor main unit 1, an axial-gap motor 2 which drives the compressor main unit 1, and an oil separator 23 (gas-liquid separator) which separates oil (liquid) from compressed air (compressed gas) discharged from the compressor main unit 1. The compressor main unit 1, the motor 2, and the oil separator 23 are integrated with each other. Specifically, the compressor main unit 1 and the motor 2 are disposed vertically such that screw rotors of the compressor main unit 1 and a rotor shaft 3 of the motor 2 extend in the vertical direction. The motor 2 is disposed on an upper side (suction side) of the compressor main unit 1 and the oil separator 23 is disposed on a lower side (discharge side) of the compressor main unit 1.

The oil separator 23 includes an inner tube 24 and an outer tube casing 26. The inner tube 24 is disposed on a lower side of the compressor main unit 1. The outer tube casing 26 is integrally molded with a compressor main unit casing 8 and forms a swirl flow path 25 between a lower portion of the compressor main unit 1 and the inner tube 24. The swirl flow path 25 is connected with a discharge flow path 15 of the compressor main unit 1.

Compressed air discharged from the compressor main unit 1 is given a swirl in the swirl flow path 25 (see the arrow in FIG. 5), so that oil contained in the compressed air is centrifugally separated. The separated oil falls along the outer tube casing 26 and is collected in an oil storage portion 27 formed on a lower side of the outer tube casing 26. The oil collected in the oil storage portion 27 is supplied to a compression chamber 9 on a suction stroke by way of a flow path not depicted. Meanwhile, the compressed air from which the oil has been separated flows into an inside of the inner tube 24 and flows out through a flow path not depicted.

As in the first embodiment, in the present embodiment, too, suction-side bearings 20 restrict axial movement of the suction-side shaft portion (motor-side shaft portion) of the screw rotor and a discharge-side bearing 21 permits axial movement of the discharge-side shaft portion (opposite-side shaft portion) of the screw rotor. Thus, changes are reduced in the gap between the discharge-side end face of the tooth portion of the screw rotor and the wall surface of the casing and in the gap between the rotor and the stator of the motor, so that performances of the compressor main unit 1 and of the motor 2 can be improved.

Additionally, the discharge-side shaft portion of the screw rotor can be made shorter in length as in the first embodiment. This feature increases the degree of freedom in design of the discharge flow path 15 and the swirl flow path 25, so that performance of the compressor main unit 1 and performance of the oil separator 23 can be improved.

It is noted that, in the second embodiment, the screw compressor has been described as having a configuration including the oil-injected compressor main unit 1, which compresses air with injecting oil in the compression chamber 9, and the oil separator 23, which separates oil from the compressed air discharged from the compressor main unit 1. Specifically, the screw compressor may include, for example, a compressor main unit that is a water-injected type (liquid-injected type) and a water separator (gas-liquid separator). The compressor main unit compresses air (gas) with injecting water (liquid) in the compression chamber 9. The water separator separates water from the compressed air (compressed gas) discharged from the compressor main unit. The same effects as those described above can be achieved in this case, too.

Additionally, the first and second embodiments have been described for a configuration in which a plurality of angular ball bearings (specifically, combined angular contact ball bearings for face to face type or back to back type) are employed as the suction-side bearings 20, which rotatably support the suction-side shaft portion of each screw rotor. Specifically, any other type of rolling bearing may be employed when the suction-side bearings 20 restrict axial movement of the suction-side shaft portion of the screw rotor and support the radial load and the axial loads in both directions.

Specifically, as one suction-side bearing that rotatably supports the suction-side shaft portion of each screw rotor, a double-row angular ball bearing for face to face type or back to back type or a deep-groove ball bearing may be employed. Or, as a plurality of suction-side bearings that rotatably support the suction-side shaft portion of each screw rotor, a plurality of tapered roller bearings (specifically, combined tapered roller bearings for face to face type or back to back type) may be employed. Alternatively, as one suction-side bearing that rotatably supports the suction-side shaft portion of each screw rotor, a double-row tapered roller bearing for face to face type or back to back type may be employed.

Additionally, the first and second embodiments have been described for a configuration in which a cylindrical roller bearing is employed as a single discharge-side bearing that rotatably supports the discharge-side shaft portion of each screw rotor. Specifically, any other type of rolling bearing may be employed when the discharge-side bearing permits axial movement of the discharge-side shaft portion of the screw rotor. Specifically, the rolling bearing may be held in the casing movably in the axial direction.

Additionally, the first and second embodiments have been described for an exemplary configuration in which the rotor shaft 3 of the motor 2 is integrally molded with the suction-side shaft portion 17 of the male rotor 7 to thereby be coaxially connected therewith. Specifically, the rotor shaft 3 of the motor 2 may be coaxially connected with the suction-side shaft portion 17 of the male rotor 7 through a coupling. Alternatively, the rotor shaft 3 of the motor 2 may be coaxially connected with the suction-side shaft portion of the female rotor. In either case, the same effects as those described above can be achieved.

Reference Signs List

| 1 | Compressor main unit |
| 2, 2A | Motor |
| 3 | Rotor shaft |
| 4, 4A, 4B | Rotor |
| 5, 5A, 5B | Stator |
| 7 | Male rotor (Screw rotor) |
| 8 | Compressor main unit casing |
| 9 | Compression chamber |
| 11 | Suction-side casing |
| 12 | Suction port |
| 14 | Discharge port |
| 17 | Suction-side shaft portion (Motor-side shaft portion) |
| 20 | Suction-side bearing |
| 23 | Oil separator (Gas-liquid separator) |

**Claims**

1. A screw compressor including a liquid-injected compressor main unit (1) that includes a screw rotor (7) and compresses gas with injecting liquid in a compression chamber (9) defined by a tooth groove (16) of the screw rotor (7) and an axial-gap motor (2) that drives the compressor main unit (1);

   the compression chamber (9) of the compressor main unit (1) draws in gas via a suction port (12) on a side in an axial direction adjacent to the motor (2) and discharges compressed gas via a discharge port (14) on a side opposite to the motor (2),
   the screw rotor (7) having a motor-side shaft portion (17) connected coaxially with a rotor shaft (3) of the motor (2), and

      the motor-side shaft portion (17) is a suction-side shaft portion,
      the screw compressor comprising:

         a suction-side bearing (20) that rotatably supports the suction-side shaft portion (17) of the screw rotor (7), wherein the suction-side bearing (20) restricts axial movement of the suction-side shaft portion (17) and bears a radial load and axial loads in both directions.

2. The screw compressor according to claim 1 , further comprising:
   a gas-liquid separator (23), disposed on a discharge side of the compressor main unit (1), for separating the liquid from the compressed gas discharged from the compressor main unit (1).

3. The screw compressor according to claim 1, wherein

      the motor (2) includes a first rotor (4A) disposed on an output side of the rotor shaft (3), a second rotor (4B) disposed on a non-output side of the rotor shaft (3), and a stator (5) disposed between the first rotor (4A) and the second rotor (4B), and

a dimension of a gap between the first rotor (4A) and the stator (5) is greater than a dimension of a gap between the second rotor (4B) and the stator (5) at room temperature.

4. The screw compressor according to claim 1, wherein

the motor (2) includes a rotor (4) disposed on the rotor shaft (3), a first stator (5A) disposed on an output side with respect to the rotor (4), and a second stator (5B) disposed on a non-output side with respect to the rotor (4), and a dimension of a gap between the rotor (4) and the first stator (5A) is smaller than a dimension of a gap between the rotor (4) and the second stator (5B) at room temperature.

5. The screw compressor according to claim 1, wherein the bearing (20) includes combined angular contact ball bearings for face to face type or back to back type, and is held at a fixed position within a casing (11).

**Patentansprüche**

1. Schraubenverdichter, der eine Verdichterhaupteinheit (1) mit Flüssigkeitseinspritzung, die einen Schraubenrotor (7) enthält und ein Gas verdichtet, wobei eine Flüssigkeit in eine Verdichtungskammer (9) eingespritzt wird, die durch eine Zahnrille (16) des Schraubenrotors (7) definiert ist, und einen Motor (2) mit axialem Spalt, der die Verdichterhaupteinheit (1) antreibt, enthält;

wobei die Verdichtungskammer (9) der Verdichterhaupteinheit (1) über eine Saugöffnung (12) auf einer Seite in einer axialen Richtung, die zum Motor (2) benachbart ist, Gas einsaugt und über eine Auslassöffnung (14) auf einer Seite, die zum Motor (2) entgegengesetzt ist, verdichtetes Gas auslässt, wobei der Schraubenrotor (7) einen motorseitigen Wellenabschnitt (17) aufweist, der mit einer Rotorwelle (3) des Motors (2) koaxial verbunden ist, und

der motorseitige Wellenabschnitt (17) ein saugseitiger Wellenabschnitt ist, wobei der Schraubenverdichter Folgendes umfasst:

ein saugseitiges Lager (20), das den saugseitigen Wellenabschnitt (17) des Schraubenrotors (7) drehbar trägt, wobei das saugseitige Lager (20) eine axiale Bewegung des saugseitigen Wellenabschnitts (17) einschränkt und eine radiale Last und axiale Lasten in beiden Richtungen trägt.

2. Schraubenverdichter nach Anspruch 1, der ferner Folgendes umfasst:
einen Gas-Flüssigkeits-Abscheider (23), der zum Abscheiden der Flüssigkeit von dem verdichteten Gas, das aus der Verdichterhaupteinheit (1) ausgelassen wird, auf einer Auslassseite des Verdichterhaupteinheit (1) angeordnet ist.

3. Schraubenverdichter nach Anspruch 1, wobei

der Motor (2) einen ersten Rotor (4A), der auf einer Ausgangsseite der Rotorwelle (3) angeordnet ist, einen zweiten Rotor (4B), der auf einer Nichtausgangsseite der Rotorwelle (3) angeordnet ist, und einen Stator (5), der zwischen dem ersten Rotor (4A) und dem zweiten Rotor (4B) angeordnet ist, enthält, und eine Abmessung eines Spalts zwischen dem ersten Rotor (4A) und dem Stator (5) bei Raumtemperatur größer als eine Abmessung eines Spalts zwischen dem zweiten Rotor (4B) und dem Stator (5) ist.

4. Schraubenverdichter nach Anspruch 1, wobei

der Motor (2) einen Rotor (4), der auf der Rotorwelle (3) angeordnet ist, einen ersten Stator (5A), der auf einer Ausgangsseite in Bezug auf den Rotor (4) angeordnet ist, und einen zweiten Stator (5B), der auf einer Nichtausgangsseite in Bezug auf den Rotor (4) angeordnet ist, enthält, und eine Abmessung eines Spalts zwischen dem Rotor (4) und dem ersten Stator (5A) bei Raumtemperatur kleiner als eine Abmessung eines Spalts zwischen dem Rotor (4) und dem zweiten Stator (5B) ist.

5. Schraubenverdichter nach Anspruch 1, wobei das Lager (20) kombinierte Schrägkugellager für einen Typ im direkten Gegenüber oder einen aufeinanderfolgenden Typ enthält und an einer feststehenden Position in einem Gehäuse (11) gehalten wird.

**Revendications**

1. Compresseur à vis incluant une unité principale de compresseur à injection de liquide (1) qui inclut un rotor à vis (7) qui comprime un gaz avec un liquide d'injection dans une chambre de compression (9) définie par une rainure de dent (16) du rotor à vis (7) et un moteur à entrefer axial (2) qui entraîne l'unité principale de compresseur (1) ;

la chambre de compression (9) de l'unité principale de compresseur (1) attire un gaz via un port d'aspiration (12) sur un côté dans une direction axiale adjacent au moteur (12) et décharge un gaz comprimé via un orifice de décharge (14) sur un côté opposé au moteur (2), le rotor à vis (7) ayant une portion d'arbre côté moteur (17) connectée coaxialement à un arbre de rotor (3) du moteur (2), et

la portion d'arbre côté moteur (17) est une portion d'arbre côté aspiration,

le compresseur à vis comprenant :

un palier côté aspiration (20) qui supporte en rotation la portion d'arbre côté aspiration (17) du rotor à vis (7), dans lequel le palier côté aspiration (20) restreint un mouvement axial de la portion d'arbre côté aspiration (17) et porte une charge radiale et des charges axiales dans les deux directions.

2. Compresseur à vis selon la revendication 1, comprenant en outre :
un séparateur gaz/liquide (23), disposé sur un côté décharge de l'unité principale de compresseur (1), pour séparer le liquide du gaz comprimé déchargé depuis l'unité principale de compresseur (1).

3. Compresseur à vis selon la revendication 1, dans lequel

le moteur (2) inclut un premier rotor (4A) disposé sur un côté de sortie de l'arbre de rotor (3), un second rotor (4B) disposé sur un côté de non-sortie de l'arbre de rotor (3), et un stator (5) disposé entre le premier rotor (4A) et le second rotor (4B), et

une dimension d'un intervalle entre le premier rotor (4A) et le stator (5) est plus grande qu'une dimension d'un intervalle entre le second rotor (4B) et le stator (5) à température ambiante.

4. Compresseur à vis selon la revendication 1, dans lequel

le moteur (2) inclut un rotor (4) disposé sur l'arbre de rotor (3), un premier stator (5A) disposé sur un côté de sortie par rapport au rotor (4), et un second stator (5B) disposé sur un côté de non-sortie par rapport au rotor (4), et

une dimension d'un intervalle entre le rotor (4) et le premier stator (5A) est plus petite qu'une dimension d'un intervalle entre le rotor (4) et le second stator (5B) à température ambiante.

5. Compresseur à vis selon la revendication 1, dans lequel
le palier (20) inclut des roulements à billes à contact angulaire combinés pour une type face à face ou un type dos à dos, et est maintenu à une position fixe à l'intérieur d'un carter (11).

# FIG. 1

# FIG. 2

# FIG. 3

# FIG. 4

# FIG. 5

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004150412 A
- WO 2007026047 A1
- DE 29904411